# EUROPÄISCHE PATENTSCHRIFT

(11) **EP 3 960 487 B1**
(45) Veröffentlichungstag und Bekanntmachung des Hinweises auf die Patenterteilung: **16.04.2025**
(21) Anmeldenummer: 21188447.3
(22) Anmeldetag: 29.07.2021
(51) Int. Cl.: B60B 1/00, B60B 21/04, B60B 21/10, B60B 5/02, B60B 21/02

(54) **HOHLKAMMERFELGE AUS EINEM FASERVERBUNDWERKSTOFF FÜR EIN FAHRZEUG**
HOLLOW CHAMBER RIM MADE OF A FIBRE COMPOSITE MATERIAL FOR A VEHICLE
JANTE À CHAMBRE CREUSE D'UNE MATIÈRE COMPOSITE FIBREUSE POUR UN VÉHICULE

(30) Priorität: 04.08.2020 DE 202020104486 U
(43) Veröffentlichungstag der Anmeldung: 02.03.2022
(73) Patentinhaber: all ahead composites GmbH, 97209 Veitshöchheim (DE)
(72) Erfinder: Gemperlein, Christian, 97456 Dittelbrunn (DE)
(74) Vertreter: advotec.

(56) Entgegenhaltungen:
- EP-A1- 2 913 200
- DE-A1- 102006 010 445
- US-A1- 2004 021 366
- US-A1- 2016 159 141
- US-A1- 2018 361 785

## Beschreibung

Die Erfindung betrifft eine Hohlkammerfelge für ein Fahrzeug nach dem Oberbegriff des Anspruchs 1. Eine entsprechende Hohlkammerfelge ist zum Beispiel aus dem Dokument US 2018/361785 A1 bekannt.

Aus dem Stand der Technik sind Felgen aus einem Faserverbundwerkstoff bereits bekannt. Sie sind der Teil des Rads, das ein ringförmiges Profil ausbildet, den Reifen aufnimmt und mittels Speichen mit der Radnabe verbunden ist. Sie werden insbesondere dann aus einem Faserverbundwerkstoff hergestellt, wenn das Fahrzeug im Gewicht reduziert werden soll. Faserverbundwerkstoffe zeichnen sich durch ihre Leichtigkeit bei gleichzeitig hoher Steifigkeit aus. Um das Gewicht bei gleichbleibender Stabilität weiter zu reduzieren, werden die Felgen als Hohlkammerfelgen ausgeführt. Die aus dem Stand der Technik bekannten Felgen haben radial äußere Reifeneingriffsabschnitte, die die Reifen seitlich umgreifen.

Nach dem derzeitigen Stand der Technik werden die Hohlkammerfelgen aus Faserverbundwerkstoffen zweiteilig ausgeführt. Dabei wird zunächst der Körper der Hohlkammerfelge gefertigt, und in einem anschließenden Arbeitsschritt werden die radial äußeren Reifeneingriffsabschnitte aufgesetzt. Diese sind in Anlehnung an die Hohlkammerfelge aus Aluminium schmal ausgestaltet.

Bei den Hohlkammerfelgen aus Faserverbundwerkstoff haben sich die aufgesetzten radial äußeren Reifeneingriffsabschnitte als Nachteil erwiesen. Durch die Technik des Aufsetzens weisen die einzelnen Schichten der radial äußeren Reifeneingriffsabschnitte radial nach außen. Kräfte, die an diesen Schichtenden angreifen, bewirken eine Delamination der Hohlkammerfelge. Die Delamination kann sich auch bei anschließend normaler Beanspruchung soweit ausweiten, dass die Hohlkammerfelge letztendlich zerstört wird. Zusätzlich hat sich die kleine Auflagefläche der Flanke der Hohlkammerfelge als nachteilig erwiesen. Ein äußerer Einfluss und/oder Stoß in diesem Bereich kann nur sehr schlecht weitergeleitet werden. Er führt deswegen häufig zu einer Beschädigung an der Hohlkammerfelge. Ein Stoß auf die Hohlkammerfelge entsteht insbesondere, jedoch nicht ausschließlich, durch Unebenheiten im Untergrund, auf dem der an der Hohlkammerfelge angebrachte Reifen rollt. Besonders bei niedrigen Luftdrücken kann der Reifen so stark komprimiert werden, dass die Hohlkammerfelge mit der Unebenheit direkt oder nur durch das Material des Reifens getrennt in Kontakt kommt. Dabei können neben den einzelnen Elementen und/oder Bereichen der Hohlkammerfelge auch der Reifen durch diese, beispielsweise durch die radial äußeren Reifeneingriffsabschnitte, beschädigt werden.

Es besteht daher ein großer Bedarf an einer einfachen, leichten, stabilen, sicheren, gegenüber äußeren Einflüssen und/oder Stößen unempfindlichen und nicht delaminierenden Hohlkammerfelge aus einem Faserverbundwerkstoff, welche für eine Vielzahl verschiedener Fahrzeuge geeignet ist. Weiterhin sollte die Hohlkammerfelge an die entsprechenden und/oder anforderungsgemäßen Bedingungen des bevorzugten Einsatzzweckes sowie die Wünsche des Benutzers anpassbar sein. Zudem sollte die Hohlkammerfelge kostengünstig herstellbar, langlebig, störungsunanfällig, wartungsarm und einfach mit dem Reifen montierbar sein. Die Erfindung hat sich daher die Aufgabe gestellt, eine Hohlkammerfelge bereitzustellen, um die oben genannten Schwierigkeiten zu überwinden und um vor allem die zuverlässig im bestimmungsgemäßen Gebrauch auftretenden äußeren Einflüsse und/oder Stöße bei gleichzeitigem Schutz vor einer Delamination derselben abzuleiten.

Diese Aufgabe wird auf überraschend einfache aber wirkungsvolle Weise von einer Hohlkammerfelge nach der Lehre des unabhängigen Hauptanspruchs 1 gelöst.

Erfindungsgemäß ist eine Hohlkammerfelge für ein Fahrzeug vorgeschlagen, die einen ersten radial äußeren Reifeneingriffsabschnitt, der einen ersten Reifenhalteabschnitt mit einer ersten äußeren Wandung aufweist, und einen von dem ersten radial äußeren Reifeneingriffsabschnitt beabstandeten zweiten radial äußeren Reifeneingriffsabschnitt, der einen zweiten Reifenhalteabschnitt mit einer zweiten äußeren Wandung aufweist, umfasst. Die Hohlkammerfelge ist aus einem Faserverbundwerkstoff mit mindestens zwei Schichten gebildet. Dabei ist die Hohlkammerfelge einteilig mit dem ersten radial äußeren Reifeneingriffsabschnitt und dem zweiten radial äußeren Reifeneingriffsabschnitt ausgestaltet und die erste äußere Wandung weist eine Krümmung in Richtung des ersten Reifenhalteabschnitts auf, die zweite äußere Wandung eine Krümmung in Richtung des zweiten Reifenhalteabschnitts.

Die erfindungsgemäße Hohlkammerfelge beruht auf dem Grundgedanken, dass die Auswirkung eines äußeren Einflusses und/oder Stoßes auf den Faserverbundwerkstoff dadurch reduziert wird, indem die direkte Einwirkung auf eine Kante der Schichten des Faserverbundwerkstoffs vermindert wird, so dass die Kraft der äußeren Einflüsse und/oder Stöße in diesem Bereich auf die einzelnen Schichten des Faserverbundwerkstoffs nicht in voneinander weg weisende Richtungen wirken kann. Außerdem wird es ermöglicht, einem äußeren Einfluss und/oder Stoß eine möglichst großflächigere Auflagefläche zu bieten, um die punktuelle Belastung zu minimieren. Diese beiden Ansatzpunkte werden mit Hilfe der speziellen geometrischen Ausgestaltung der Hohlkammerfelge inklusive der radial äußeren Reifeneingriffsabschnitte verwirklicht, indem die besonders belasteten radial äußeren Reifeneingriffsabschnitte nicht schmal, sondern deutlich verbreitert und an den äußeren Wandungen gekrümmt ausführt sind. Durch diese Krümmung wird die Hohlkammer bis in die radial äußeren Reifeneingriffsabschnitte hinein vergrößert. Dadurch ist es möglich, die einzelnen Schichten des Faserverbundwerkstoffs kontinuierlich über das gesamte Profil der Hohlkammerfelge zu führen und die Hohlkammerfelge einteilig auszugestalten. Unter "kontinuierlich" wird verstanden, dass die einzelnen Schichtenden im Schichtsystem versetzt zueinander angeordnet sind und insbesondere nicht an derselben Stelle enden und so eine Abschlusskante bilden. Außerdem weist die erfindungsgemäße Hohlkammerfelge aufgrund ihrer Geometrie keine exponierte Kante auf, an der ein äußerer Einfluss und/oder Stoß angreifen kann, insbesondere kein Kante, an der eine Mehrzahl von Schichten endet. Zusätzlich wird durch die Krümmung der radial äußeren Reifeneingriffsabschnitte einem äußeren Einfluss und/oder Stoß eine maximale Auflagefläche geboten. Dadurch kann die Kraft großflächig abgeleitet werden und die Gefahr der Überlastung des Materials ist deutlich verringert. Im Rahmen der Erfindung ist auch erkannt worden, dass durch die gekrümmte Ausführung der radial äußeren Reifeneingriffsabschnitte die Möglichkeit der Beschädigung des Reifens durch diese nicht mehr gegeben ist.

Erfindungsgemäß weist die Hohlkammerfelge einen ersten radial äußeren Reifeneingriffsabschnitt, der einen ersten Reifenhalteabschnitt mit einer ersten äußeren Wandung aufweist, und einen von dem ersten radial äußeren Reifeneingriffsabschnitt beabstandeten zweiten radial äußeren Reifeneingriffsabschnitt auf, der ebenfalls einen zweiten Reifenhalteabschnitt mit einer zweiten äußeren Wandung aufweist. Hauptaufgabe des ersten und zweiten radial äußeren Reifeneingriffsabschnitts ist es, den Reifen in seiner Position zu halten. Dazu wird der Reifen in der Beabstandung zwischen dem ersten und dem zweiten radial äußeren Reifeneingriffsabschnitt platziert. Dabei liegt der Reifen, der zwischen den radial äußeren Reifeneingriffsabschnitten platziert ist, an den Reifenhalteabschnitten an. Dabei ist es als erfindungswesentlich erkannt worden, dass die Hohlkammerfelge einteilig mit dem ersten radial äußeren Reifeneingriffsabschnitt und dem zweiten radial äußeren Reifeneingriffsabschnitt ausgebildet ist.

Ein "Reifen" bezeichnet den Teil des Rades, der umlaufend Kontakt zum Untergrund hat. Dieser umfasst einen Mantel und einen Schlauch ("Drahtreifen"), wobei in einer Ausführung Mantel und Schlauch miteinander verbunden sind ("Schlauchreifen") oder in einer weiteren Ausführung auf den Schlauch verzichtet wurde ("Schlauchlose Bereifung").

Weiter ist es als erfindungswesentlich erkannt worden, dass die erste äußere Wandung eine Krümmung in Richtung des ersten Reifenhalteabschnitts und die zweite äußere Wandung eine Krümmung in Richtung des zweiten Reifenhalteabschnitts aufweist.

Der Begriff "Krümmung" bezeichnet in seiner einfachsten Form die lokale und stetige Abweichung einer Kurve von einer Geraden. Mithilfe des Krümmungsmaßes, dem Differentialquotienten des Winkels der Kurvennormalen zur Länge des entsprechenden Kurvenstücks, kann für jeden Punkt der Kurve die lokale Abweichung quantitativ angegeben werden. Ist das Krümmungsmaß an einem Punkt nicht null, so wird der Kehrwert des Krümmungsmaßes an diesem Punkt Krümmungsradius genannt. Erfindungsgemäß kann die Stärke der Abweichung über dem Verlauf der Krümmung variieren, jedoch nicht in ihrer Richtung. Eine Krümmung in Richtung eines bestimmten Punkts meint, dass die lokale Abweichung der Kurve auf eine Art erfolgt, so dass die Kurve oder deren am Ende der Kurve stetig fortgesetzte Tangente nach der Abweichung den bestimmten Punkt auf einem kürzeren Weg erreicht oder mit einem geringeren Abstand passiert.

Die erfindungsgemäße Hohlkammerfelge ist aus einem Faserverbundwerkstoff mit mindestens zwei Schichten ausgebildet. Der Begriff "Hohlkammerfelge" bezeichnet eine Felge, die einen doppelten Felgenbogen aufweist. Zwischen diesen Felgenbogen ist ein Hohlraum, die Hohlkammer, eingeschlossen. Sie erreichen dadurch eine ausreichende Stabilität bei geringerem Gewicht. Generell können Hohlkammerfelgen aus jedem beliebigen ausreichend stabilen Material gefertigt werden.

Im Rahmen der Erfindung ist der Inhalt der Hohlkammer beliebig. Bevorzugt ist es denkbar, dass die Hohlkammer vollständig oder teilweise mit mindestens einem Medium gefüllt ist. Das Medium ist beispielsweise ein Gas oder Gasgemisch, wie beispielsweise Luft, ein Kunststoff, insbesondere ein Schaumstoff, ein Gel und/oder ein Gemisch daraus, wobei das Medium eine geringere Dichte als das es umgebende Material aufweist. Dabei kann die Hohlkammerfelge auch mit zwei, drei, vier, fünf, sechs oder mehr Medien gefüllt sein.

Der Begriff "Faserverbundwerkstoff" betrifft einen Verbundwerkstoff, der aus in einer Matrix eingebetteten, aus dem Stand der Technik bekannten Fasern besteht. Die Fasern sind bevorzugt in mindestens zwei, drei, vier, fünf, sechs, sieben, acht, neun, zehn, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100 oder mehr Schichten übereinander angeordnet. Dabei können sie im Grunde parallel oder in unterschiedliche Richtungen verlaufen, wobei sie bei letzterem in der Regel zu Geweben verflochten sind. Dabei ist es als wesentlich erkannt worden, dass die mindestens zwei Schichten des Faserverbundwerkstoffs im bestimmungsgemäßen Gebrauch vollständig verbunden bleiben und nicht delaminieren. Unter "Delamination" versteht der Fachmann das teilweise oder vollständige Lösen der Schichten des Faserverbundwerkstoffs voneinander.

Der Begriff "bestimmungsgemäßer Gebrauch der Hohlkammerfelge" betrifft die Benutzung der mit einem Reifen versehenen Hohlkammerfelge im am Fahrzeug verbauten Zustand. Darunter zählt insbesondere das Fahren und/oder Stehen des Fahrzeugs auf einem Untergrund jeglicher Art, insbesondere einem ebenen, unebenen, geraden, ungeraden, befestigten und/oder unbefestigten Untergrund. Während des bestimmungsgemäßen Gebrauchs kann die Hohlkammerfelge einem äußeren Einfluss und/oder Stoß ausgesetzt sein. Im Rahmen der Erfindung ist dabei erkannt worden, dass die erfindungsgemäße Hohlkammerfelge aufgrund der baulichen Ausgestaltung im bestimmungsgemäßen Gebrauch widerstandsfähig gegenüber einem äußerem Einfluss und/oder Stoß ist.

Der Begriff "Stoß" betrifft eine im bestimmungsgemäßen Gebrauch der Hohlkammerfelge auftretende Einwirkung auf dieselbe, insbesondere solche, die durch einen Sprung, wie einen sportbedingten Sprung, ein Hindernis, durch das Rollen über im Fahrweg vorkommende Unebenheiten, beispielweise Steine, Felsen, Wurzeln und/oder andere Ausbildungen von Vegetation, straßenbaubedingte Kanten und/oder Erhebungen, verursacht werden. Dieser kann insbesondere bei einer Fahrt auf einer ebenen, unebenen, befestigten, unbefestigten, vollständig oder teilweise ausgebauten und/oder asphaltierten Straße bzw. Weg und/oder abseits derselben auftreten.

Der Begriff "äußerer Einfluss" betrifft eine Krafteinwirkung auf die Hohlkammerfelge durch bestimmungsgemäßen Gebrauch und/oder nicht bestimmungsgemäßen Gebrauch, beispielsweise im nicht im Fahrzeug verbauten Zustand. Darunter fällt insbesondere, aber nicht ausschließlich, ein Sturz, ein Unfall, ein Zusammenstoß, insbesondere mit einem oder mehreren anderen Fahrzeugen, Vandalismus, ein Schlag, unsachgemäße Wartung und/oder unsachgemäße Reparatur.

Mittels der Erfindung ist es möglich, die Hohlkammerfelge bereitzustellen, welche im bestimmungsgemäßen Gebrauch und/oder nicht bestimmungsgemäßen Gebrauch vor einer Beschädigung derselben und/oder des montierten Reifens, insbesondere eine Beschädigung durch Delamination, geschützt ist. Neben der Hohlkammerfelge wird dabei auch der Reifen durch die besondere gekrümmte Ausgestaltung der radial äußeren Reifeneingriffsabschnitte vor Beschädigungen durch die Hohlkammerfelge selbst geschützt. Gleichzeitig ist die Hohlkammerfelge durch die hohle Bauweise und durch die Verwendung von Faserverbundwerkstoffen, die ein besonders günstiges Verhältnis von Stabilität und Gewicht bieten, besonders leicht händelbar und gut transportabel. Aufgrund der einteiligen Ausgestaltung der Hohlkammerfelge fällt zudem mindestens ein Arbeitsschritt in der Herstellung der Hohlkammerfelge weg, was zu einer erheblichen Einsparung bei der Herstellungszeit und damit auch bei den Herstellungskosten führt.

Vorteilhafte Weiterbildungen der Erfindung, welche einzeln oder in Kombination realisierbar sind, sind in den Unteransprüchen dargestellt.

In einer Ausgestaltung der vorliegenden Erfindung ist es denkbar, dass die axiale Ausdehnung des Profils der Hohlkammerfelge größer ist als die radiale Ausdehnung des Profils der Hohlkammerfelge. Im Rahmen der Erfindung ist erkannt worden, dass eine, verglichen mit herkömmlichen Felgen, verbreiterte und gleichzeitig flache Hohlkammerfelge für das Fahren auf einem ebenen, unebenen, geraden, ungeraden befestigten und/oder unbefestigten Untergrund von Vorteil ist. Die erfindungsgemäße Hohlkammerfelge bietet neben der Gewichtsreduktion zudem die Möglichkeit, einen breiteren Reifen zu verwenden. Der breitere Reifen hat gegenüber dem Boden eine größere Haftung, die insbesondere, aber nicht ausschließlich, notwendig ist, um einen Sturz zu verhindern. Gleichzeitig kann der Reifendruck im Reifen verringert werden. Dadurch passt sich der Reifen in seiner Form dem Untergrund an und wird so in seiner Rollbewegung weniger gebremst. Außerdem erhöht diese Anpassung den Komfort für den Fahrer.

In einer Weiterbildung der Ausgestaltung ist es denkbar, dass die axiale Ausdehnung des Profils der Hohlkammerfelge einen Wert im Bereich von 10 mm bis 400 mm und/oder die radiale Ausdehnung des Profils der Hohlkammerfelge einen Wert im Bereich von 5 mm bis 80 mm aufweist. Die axiale Ausdehnung des Profils der Hohlkammer beträgt bevorzugt mindestens 10 mm, noch mehr bevorzugt mindestens 15mm, 20mm, 25 mm, 30 mm, 35 mm, 40 mm, 45 mm, 50 mm, 55 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, 150 mm, 155 mm, 160 mm, 165 mm, 170 mm, 175 mm, 180 mm, 185 mm, 190 mm, 195 mm, 200 mm, 205 mm, 210 mm, 215 mm, 220 mm, 225 mm, 230 mm, 235 mm, 240 mm, 245 mm, 250 mm, 255 mm, 260 mm, 265 mm, 270 mm, 275 mm, 280 mm, 285 mm, 290 mm, 295 mm, 300 mm, 305 mm, 310 mm, 315 mm, 320 mm, 325 mm, 330 mm, 335 mm, 340 mm, 345 mm, 350 mm, 355 mm, 360 mm, 365 mm, 370 mm, 375 mm, 380 mm, 385 mm, 390 mm, 395 mm oder 400 mm. Die radiale Ausdehnung des Profils der Hohlkammer beträgt bevorzugt mindestens 5 mm, noch mehr bevorzugt mindestens 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, 50 mm, 51 mm, 52 mm, 53 mm, 54 mm, 55 mm, 56 mm, 57 mm, 58 mm, 59 mm, 60 mm, 61 mm, 62 mm, 63 mm, 64 mm, 65 mm, 66 mm, 67 mm, 68 mm, 69 mm, 70 mm, 71 mm, 72 mm, 73 mm, 74 mm, 75 mm, 76 mm, 77 mm, 78 mm, 79 mm oder 80 mm.

Zudem ist es denkbar, dass das Verhältnis der oben genannten, bevorzugten radialen Ausdehnung zur oben genannten, bevorzugten axialen Ausdehnung im Bereich zwischen 1:2 und 1:10 liegt. Das Verhältnis der radialen Ausdehnung zur axialen Ausdehnung beträgt bevorzugt mindestens 1:2, noch mehr bevorzugt mindestens 1:3, 1:4, 1:5, 1:6, 1:7, 1:8, 1:9 oder 1:10. Diese Ausmaße bieten einen optimalen Kompromiss zwischen der Stabilität, dem Gewicht, der Haftung und dem Fahrkomfort.

Gemäß der Erfindung ist die Krümmung der ersten äußeren Wandung und/oder die Krümmung der zweiten äußeren Wandung ein Krümmungsmaß im Bereich von 0,05 mm⁻¹ bis 1,0 mm⁻¹ aufweist. Der entsprechende Krümmungsradius liegt in dem Bereich von 1 mm bis 20 mm. Das Krümmungsmaß beträgt bevorzugt mindestens 0,05 mm⁻¹, noch mehr bevorzugt mindestens 0,06 mm⁻¹, 0,07 mm⁻¹,0,08 mm⁻¹, 0,09 mm⁻¹, 0,10 mm⁻¹, 0,11 mm⁻¹, 0,12 mm⁻¹, 0,13 mm⁻¹, 0,14 mm⁻¹, 0,15 mm⁻¹, 0,16 mm⁻¹, 0,17 mm⁻¹, 0,18 mm⁻¹, 0,19 mm⁻¹, 0,20 mm⁻¹, 0,21 mm⁻¹, 0,22 mm⁻¹, 0,23 mm⁻¹, 0,24 mm⁻¹, 0,25 mm⁻¹, 0,26 mm⁻¹, 0,27 mm⁻¹, 0,28 mm⁻¹, 0,29 mm⁻¹, 0,30 mm⁻¹, 0,31 mm⁻¹, 0,32 mm⁻¹, 0,33 mm⁻¹, 0,34 mm⁻¹, 0,35 mm⁻¹, 0,36 mm⁻¹, 0,37 mm⁻¹, 0,38 mm⁻¹, 0,39 mm⁻¹, 0,40 mm⁻¹, 0,41 mm⁻¹, 0,42 mm⁻¹, 0,43 mm⁻¹, 0,44 mm⁻¹, 0,45 mm⁻¹, 0,46 mm⁻¹, 0,47 mm⁻¹, 0,48 mm⁻¹, 0,49 mm⁻¹, 0,50 mm⁻¹, 0,51 mm⁻¹, 0,52 mm⁻¹, 0,53 mm⁻¹, 0,54 mm⁻¹, 0,55 mm⁻¹, 0,56 mm⁻¹, 0,57 mm⁻¹, 0,58 mm⁻¹, 0,59 mm⁻¹, 0,60 mm⁻¹, 0,61 mm⁻¹, 0,62 mm⁻¹, 0,63 mm⁻¹, 0,64 mm⁻¹, 0,65 mm⁻¹, 0,66 mm⁻¹, 0,67 mm⁻¹, 0,68 mm⁻¹, 0,69 mm⁻¹, 0,70 mm⁻¹, 0,71 mm⁻¹, 0,72 mm⁻¹, 0,73 mm⁻¹, 0,74 mm⁻¹, 0,75 mm⁻¹, 0,76 mm⁻¹, 0,77 mm⁻¹, 0,78 mm⁻¹, 0,79 mm⁻¹, 0,80 mm⁻¹, 0,81 mm⁻¹, 0,82 mm⁻¹, 0,83 mm⁻¹, 0,84 mm⁻¹, 0,85 mm⁻¹, 0,86 mm⁻¹, 0,87 mm⁻¹, 0,88 mm⁻¹, 0,89 mm⁻¹, 0,90 mm⁻¹, 0,91 mm⁻¹, 0,92 mm⁻¹, 0,93 mm⁻¹, 0,94 mm⁻¹, 0,95 mm⁻¹, 0,96 mm⁻¹, 0,97 mm⁻¹, 0,98 mm⁻¹, 0,99 mm⁻¹ oder 1,00 mm⁻¹. Im Rahmen der Erfindung es ist denkbar, dass die Krümmung der ersten äußeren Wandung und der zweiten äußeren Wandung gleich oder unterschiedlich ist. Bei der Ausgestaltung der Krümmung muss darauf geachtet werden, dass diese ausreichend flach ist, um die oben aufgeführten Vorteile zu erreichen. Gleichzeitig bedeutet aber eine zu flache Krümmung, dass zusätzliches Material verbaut werden muss.

In noch einer Weiterbildung ist es denkbar, dass die Krümmung der ersten äußeren Wandung und die Krümmung der zweiten äußeren Wandung über die äußeren Wandungen hinaus fortgesetzt sind und im Bereich eines inneren Felgenbogens zu einer Krümmung stetig vereint sind. Durch diese Ausgestaltung weist die Hohlkammerfelge mit Ausnahme des Bereichs zwischen den radial äußeren Reifeneingriffsabschnitten keine Kanten auf, insbesondere nicht im Bereich des inneren Felgenbogens.

Kanten stellen in einem Faserverbundwerkstoff stets eine Schwachstelle dar, da hier angreifende Kräfte besonders schnell zu einer Delamination führen. Der Bereich der Hohlkammerfelge zwischen den radial äußeren Reifeneingriffsabschnitten wird durch den Reifen zusätzlich geschützt.

Mit dem Begriff "stetig" ist gemeint, dass beide Kurven im Punkt ihres Aufeinandertreffens im Wesentlichen dieselbe Tangente besitzen. Die Begriffe "im Wesentlichen" und "im Wesentlichen dieselbe" bedeuten, dass es lediglich zu einer geringen, insbesondere nicht signifikanten, Veränderung, Änderung und/oder Abweichung von den entsprechenden Bedingungen kommt.

Zudem ist es denkbar, dass die Breite des ersten radial äußeren Reifeneingriffsabschnitt und/oder des zweiten radial äußeren Reifeneingriffsabschnitt bevorzugt 2 mm bis 60 mm beträgt. Die Breite des ersten radial äußeren Reifeneingriffsabschnitt und/oder des zweiten radial äußeren Reifeneingriffsabschnitt beträgt bevorzugt mindestens 2 mm, noch mehr bevorzugt mindestens 3 mm, 4 mm, 5 mm, 6 mm, 7 mm, 8 mm, 9 mm, 10 mm ,11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, 50 mm, 51 mm, 52 mm, 53 mm, 54 mm, 55 mm, 56 mm, 57 mm, 58 mm, 59 mm und/oder 60 mm. Im Rahmen der Erfindung es ist denkbar, dass die Breite des ersten radial äußeren Reifeneingriffsabschnitts und des zweiten radial äußeren Reifeneingriffsabschnitts gleich oder unterschiedlich ist.

Weiter bevorzugt ist es denkbar, dass der erste und der zweite radial äußere Reifeneingriffsabschnitt identisch ausgestaltet sind. Eine identische Ausgestaltung bietet eine optimale zentrale Platzierung des Reifens zwischen den radial äußeren Reifeneingriffsabschnitten. Dadurch wird das Ausbalancieren insbesondere zweirädriger Fahrzeuge deutlich vereinfacht.

Es ist weiterhin denkbar, dass der erste radial äußere Reifeneingriffsabschnitt und der erste Reifenhalteabschnitt und/oder der zweite radial äußere Reifeneingriffsabschnitt und der zweite Reifenhalteabschnitt eine ebene Anlage für den Reifen ausbilden. Durch die technisch bedingten verringerten Fertigungstoleranzen bei der Herstellung von Reifen hat es sich gezeigt, dass die Haken an den Reifenhalteabschnitten, die dem Reifen auch bei Abweichungen vom angegebenen Durchmesser ausreichend Halt geboten haben, nicht mehr benötigt werden. Dies gilt insbesondere, wenn der Reifen mit einem vergleichsweise niedrigen Reifendruck verwendet wird. Da diese Haken eine Kante darstellen und Kanten einerseits Angriffsfläche für Delamination und andererseits fertigungstechnisch aufwendiger sind, ist es vorteilhaft, auf diese zu verzichten und den Reifenhalteabschnitt eben auszuführen.

In einer vorteilhaften Weiterbildung ist es denkbar, dass der Faserverbundwerkstoff Glasfasern, Aramidfasern, Borfasern, Basaltfasern, Quarzfasern, Kohlenstofffasern und/oder ein Gemisch daraus und eine Matrix umfasst. Bevorzugt ist der Faserverbundwerkstoff ein Kohlenstofffaserverbundwerkstoff (Carbon) mit Kohlenstofffasern. Kohlenstofffaserverbundwerkstoffe zählen zu den stabilsten Faserverbundwerkstoffen. Ihre Verwendung im Leichtfahrzeugbau ist bekannt und gut beherrschbar. Gleichzeitig verursacht dieses Material hohe Materialkosten, weswegen der Erhalt der Hohlkammerfelge besonders vorteilhaft ist. Auch das für die Matrix verwendete Material ist grundsätzlich beliebig. Bevorzugt werden Duroplasten, wie beispielsweise ungesättigtes Polyesterharz (UP), Vinylesterharz (VE), Phenol-Formaldehydharz (PF), Diallylphthalatharz (DAP), Methacrylatharz (MMA), Polyurethan (PUR) oder Aminoharze, oder Thermoplasten, wie beispielsweise Polyetheretherketon (PEEK), Polyphenylensulfid (PPS), Polysulfon (PSU), Polyetherimid (PEI) oder Polytetrafluorethen (PTFE), verwendet. Besonders bevorzugt wird Epoxidharz (EP) verwendet. Dem Fachmann ist dabei bekannt, welche Fasern sich mit welchen Matrixmaterialien kombinieren lassen.

Weiterhin ist es denkbar, dass der Faserverbundwerkstoff eine erste äußerste Schicht und eine zweite äußerste Schicht aufweist, wobei ein Bogenabschnitt der Hohlkammerfelge mit der ersten äußersten Schicht des Faserverbundwerkstoffs und der zweiten äußersten Schicht des Faserverbundwerkstoffs vollständig umschlossen ist und wobei die erste äußerste Schicht des Faserverbundwerkstoffs und die zweite äußerste Schicht des Faserverbundwerkstoffs durch radial entlang des Bereiches des inneren Felgenbogens und eines Tiefbetts der Hohlkammerfelge verlaufende Linien begrenzt sind. Die Ausgestaltung der einzelnen Schichten ist grundsätzlich beliebig.

Die Hohlkammerfelge kann in 1, 2, 3, 4, 5, 6, 7, 8, 9, 10 oder mehr Bogenabschnitte geteilt werden, wobei die Teilung in genau einen Bogenabschnitt der gesamten Hohlkammerfelge entspricht. Die einzelnen Bogenabschnitte können unterschiedliche Größen aufweisen, bevorzugt ist die Unterteilung in gleichgroße Bogenabschnitte.

Die erste und die zweite äußerste Schicht des Faserverbundwerkstoffs können sich entlang der begrenzenden Linien berühren sowie teilweise oder vollständig überlagern. Außerdem können sich die Lagen an den Randbereichen zum nächsten Bogenabschnitt mit dessen Lagen berühren sowie teilweise oder entlang der gesamten Begrenzung überlagern.

Auf die gleiche Art wie Kanten bilden die Ränder von Schichten des Faserverbundwerkstoffs eine Schwachstelle. Radial dort angreifende Kräfte führen besonders schnell zur Delamination. Deswegen ist es von Vorteil, Schichten des Faserverbundwerkstoffs an denjenigen Stellen enden zu lassen, an denen das Auftreten von radialen Kräften am unwahrscheinlichsten ist. Eine solche Stelle stellt insbesondere der innere Felgenbogen dar, da dieser beim bestimmungsgemäßen Gebrauch nicht mit dem Untergrund in Kontakt kommt. Eine weitere Stelle stellt insbesondere das zwischen den radial äußeren Reifeneingriffsabschnitten gelegene Tiefbett dar, da dieses durch den Reifen und seine zurückgesetzte Lage zusätzlich vor Krafteinwirkungen geschützt ist. Ein "Tiefbett" ist eine Vertiefung zwischen den radial äußeren Reifeneingriffsabschnitten, die insbesondere für die Montage und Demontage des Reifens notwendig ist.

In einer Weiterbildung ist es denkbar, dass der Faserverbundwerkstoff vier oder fünf Schichten aufweist. Mit vier oder fünf Schichten wird eine ausreichende Stabilität bei möglichst geringem Gesamtgewicht der Hohlkammerfelge erreicht.

Überdies ist es denkbar, dass die Hohlkammerfelge im Bereich des inneren Felgenbogens, des ersten radial äußeren Reifeneingriffsabschnitts und/oder des zweiten radial äußeren Reifeneingriffsabschnitts verstärkt ist, insbesondere durch lokal begrenzte Schichten des Faserverbundwerkstoffs. Im Rahmen der Erfindung ist erkannt worden, dass bestimmte Abschnitte der Hohlkammerfelge mehr beansprucht werden als andere. Dies betrifft insbesondere die radial äußeren Reifeneingriffsabschnitte. Äußere Einflüsse und/oder Stöße, die insbesondere, jedoch nicht ausschließlich, durch unebenen und/oder unbefestigten Untergrund verursacht werden, treffen hauptsächlich in diesen Bereichen auf. Ein weiterer besonders beanspruchter Abschnitt stellt der innere Felgenbogen dar, da er das Gewicht des Fahrers und des Fahrzeugs sowie jegliches Zusatzgewicht, das sich im Fahrzeug befindet, trägt. Außerdem muss der innere Felgenbogen auch zusätzliche Energie aufnehmen, die beispielsweise durch den Fall des Fahrzeugs auf den Untergrund entstehen kann. Um diesen besonders beanspruchten Abschnitten ausreichende Stabilität zu verleihen, ist es vorteilhaft, sie durch lokal begrenzte Schichten des Faserverbundwerkstoffs zu verstärken. Die Position der zusätzlich lokal begrenzten Schichten des Faserverbundwerkstoffs im Schichtsystem ist beliebig. Insbesondere können sie die äußerste, die innerste oder eine Zwischenschicht bilden. Außerdem können mehrere lokal begrenzte Schichten des Faserverbundwerkstoffs zur Verstärkung desselben beanspruchten Bereiches im Schichtsystem angeordnet werden. Diese können an der gleichen oder an unterschiedlichen Positionen in das Schichtsystem eingebettet werden. Außerdem kann/können eine oder mehrere lokal begrenzte Schicht/en des Faserverbundwerkstoffs sich über einen besonders beanspruchten Bereich hinaus in einen oder mehrere weitere besonders beanspruchte Bereiche erstrecken und damit zwei oder mehr besonders beanspruchte Bereiche verstärken.

Eine andere vorteilhafte Weiterbildung ist, dass zwischen den Schichten des Faserverbundwerkstoffs ein Druckverteilelement angeordnet ist. Dieses Druckverteilelement ist aus einem elastisch verformbaren Material. Die Elastizität des elastisch verformbaren Materials ist dabei höher als die Elastizität des Faserverbundwerkstoffs. Kommt es zu einem äußeren Einfluss und/oder Stoß auf den Faserverbundwerkstoff, wird ein Teil von dessen Energie von dem elastisch verformbaren Material aufgenommen. Darüber hinaus wird der Anteil der Kraft, der an die unterliegenden Schichten des Faserverbundwerkstoffs weitergeleitet wird, großflächig verteilt. Diese Vorteile können insbesondere dann genutzt werden, wenn das Druckverteilelement in dem besonders beanspruchten ersten und/oder zweiten radial äußeren Reifeneingriffsabschnitt angeordnet ist oder das Druckverteilelement die gesamte Hohlkammerfelge umschließt.

Welches elastisch verformbare Material zur Herstellung eingesetzt wird, ist grundsätzlich beliebig. Bevorzugt sollte es sich um ein Elastomer handeln, insbesondere um ein Elastomer, das einen Kautschukanteil enthält, wobei auch unterschiedliche Arten von Kautschuk, nämlich Ethylen-Propylen-Dien-Kautschuk (EPDM), Ethylen-Acrylat-Kautschuk (EAM), Fluorkautschuk (FKM), Acrylatkautschuk (ACM), AcrylnitrilButadien-Kautschuk (NBR), Hydrierter Acrylnitrilbutadien-Kautschuk (HNBR), carboxylierter Nitril-Butadien-Kautschuk (XNBR), Naturkautschuk (NR), chlorsulfonierter Ethylenkautschuk (CSM), Silikonkautschuk (VMQ/MVQ), und/oder Fluor-Silikon-Kautschuk (MFQ) enthalten sein können. Die oben genannten Vorteile können insbesondere dann optimal genutzt werden, wenn das elastisch verformbare Material chemisch auf eine Art beschaffen ist, dass es mit dem Matrixmaterial des Faserverbundwerkstoffs eine stoffschlüssige Verbindung eingeht.

Zudem ist es denkbar, dass das Fahrzeug ein Zweirad, insbesondere ein Fahrrad, Motorrad, Kleinkraftrad, Roller, Tretroller, Pedelec oder Laufrad, ein Dreirad, insbesondere ein Trike, Liegefahrrad oder Velomobil, ein Einrad, ein Lastenrad, ein Rollstuhl, ein Anhänger, ein Beiwagen, eine Schubkarre, ein Handkarren oder ein Fuhrwerk, insbesondere ein Marathonwagen, ist. Dabei ist das Fahrzeug, an dem die Hohlkammerfelge verbaut wird, grundsätzlich beliebig.

Bei einer weiteren vorteilhaften Weiterbildung ist die Hohlkammerfelge mit einem schlauchlosen Reifen bereift. Schlauchlose Reifen zeichnen sich durch ein geringeres Gewicht und einen niedrigeren Reifendruck aus. Außerdem ist bei ihnen die durch die relativ zum Schlauch auftretende Bewegung des Mantels verursachte Reibung nicht möglich. Um die Hohlkammerfelge mit einem schlauchlosen Reifen nutzen zu können, muss diese speziell präpariert werden, da ansonsten die Luft durch beispielweise die Nippellöcher entweicht. Dem Fachmann sind geeignete Maßnahmen bekannt.

Es wird davon ausgegangen, dass die Definitionen und Ausführungen der oben genannten Begriffe für alle in dieser Beschreibung und im Folgenden beschriebenen Aspekte gelten, sofern nichts anderes angegeben ist.

Weitere Einzelheiten, Merkmale und Vorteile der Erfindung ergeben sich aus der nachfolgenden Beschreibung der bevorzugten Ausführungsbeispiele in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen gleiche oder funktionsgleiche bzw. hinsichtlich ihrer Funktion einander entsprechende Elemente.

Im Einzelnen zeigen:
- **Fig. 1**: eine isometrische Darstellung einer Ausführung der erfindungsgemäßen Hohlkammerfelge;
- **Fig. 2**: eine isometrische Darstellung eines Querschnittes der erfindungsgemäßen Hohlkammerfelge entlang einer axialen Ebene;
- **Fig. 3**: einen Teilausschnitt (Fig. 3A und 3B) einer Schnittansicht des Profils der erfindungsgemäßen Hohlkammerfelge und
- **Fig. 4**: einen Teilausschnitt (Fig. 4A und 4B) einer Schnittansicht des Profils der erfindungsgemäßen Hohlkammerfelge inklusive eines Druckverteilelements.

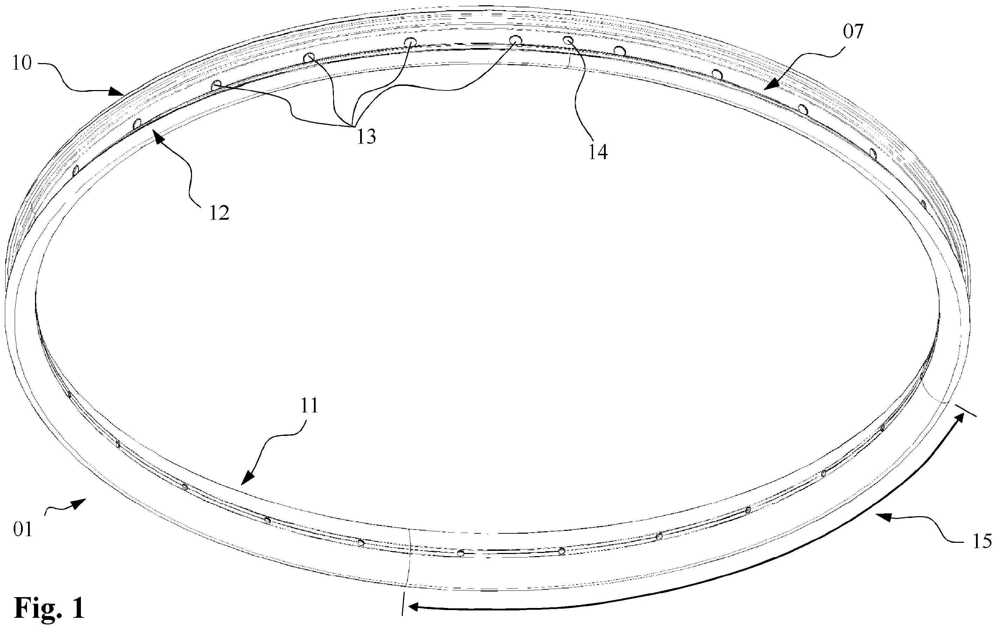

**Figur** 1 zeigt eine isometrische Darstellung der erfindungsgemäße Hohlkammerfelge 01. Die Hohlkammerfelge 01 umfasst einen äußeren Felgenbogen 07, einen inneren Felgenbogen 11, einen ersten radial äußeren Reifeneingriffsabschnitt 10 und einen zweiten radial äußeren Reifeneingriffsabschnitt 12, die eine nicht dargestellte Hohlkammer umschließen. Die abgebildete Ausführung der Hohlkammerfelge 01 ist in vier gleich große Bogenabschnitte 15 unterteilt. Der Übersicht halber ist exemplarisch nur einer der Bogenabschnitte 15 angezeichnet und benannt worden. Dabei ist es in Figur 1 gut zu erkennen, dass die axiale Ausdehnung des Profils der Hohlkammerfelge größer ist als die radiale Ausdehnung der Profils der Hohlkammerfelge, so dass die Hohlkammerfelge 01 eine flache Bauart aufweist.

Weiterhin ist es in Figur 1 gut zu erkennen, dass am äußeren Felgenbogen 07 ein nicht dargestellter Reifen montiert werden kann. Im Bereich des äußeren Felgenbogens 07 und des inneren Felgenbogen 11 sind zudem Nippellöcher 13 in regelmäßigen Abständen angeordnet, die zur Aufnahme nicht dargestellter Speichen dienen. Um die Hohlkammerfelge 01 mit einem nicht dargestellten schlauchlosen Reifen zu nutzen, werden die Nippellöcher 13 in Richtung des äußeren Felgenbogens 07 abgedichtet. Zwischen den Nippellöchern 13 ist an einer Stelle ein Ventilloch 14 angeordnet. Dieses dient dazu, das Ventil des nicht dargestellten Reifens auf die Innenseite der Hohlkammerfelge 01 zu führen.

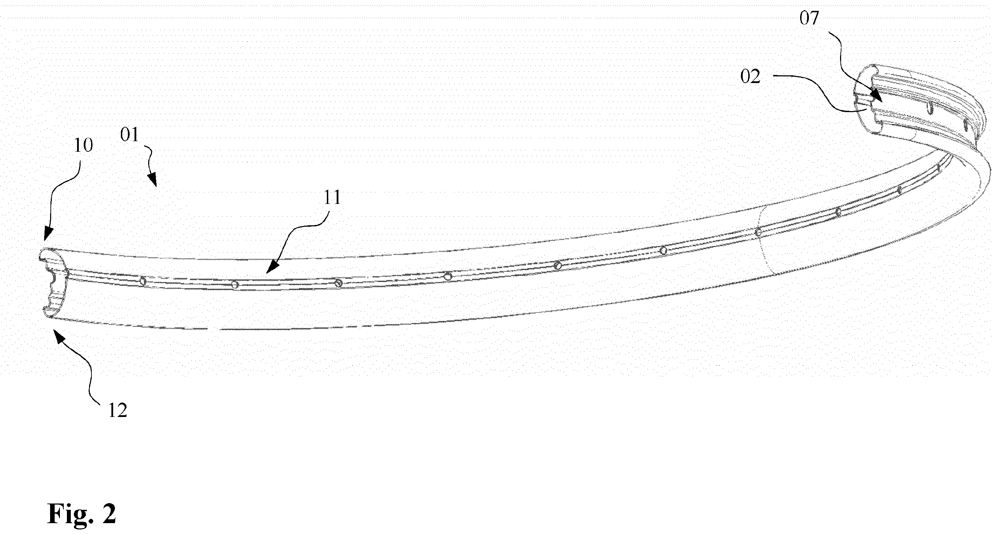

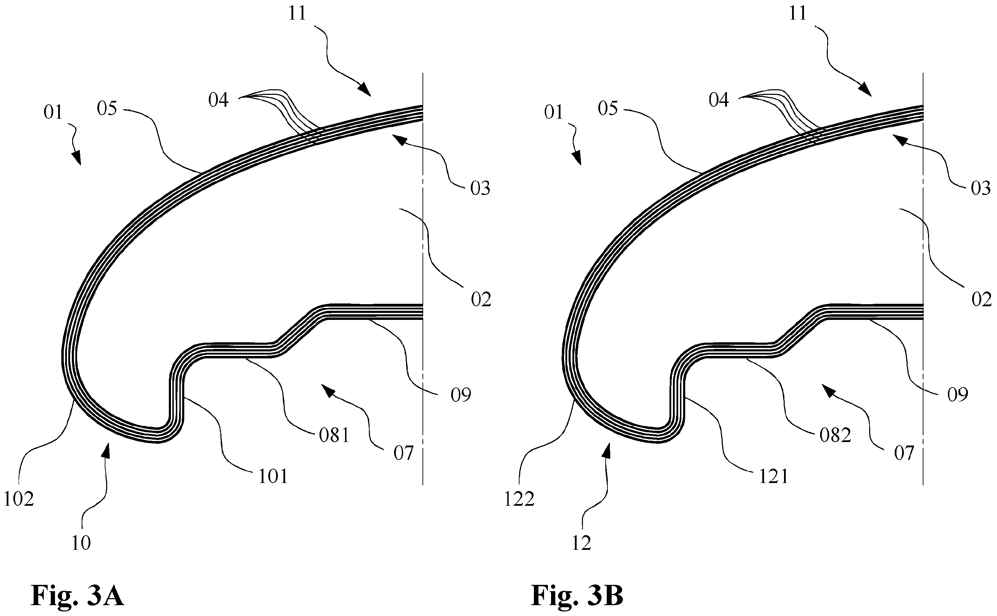

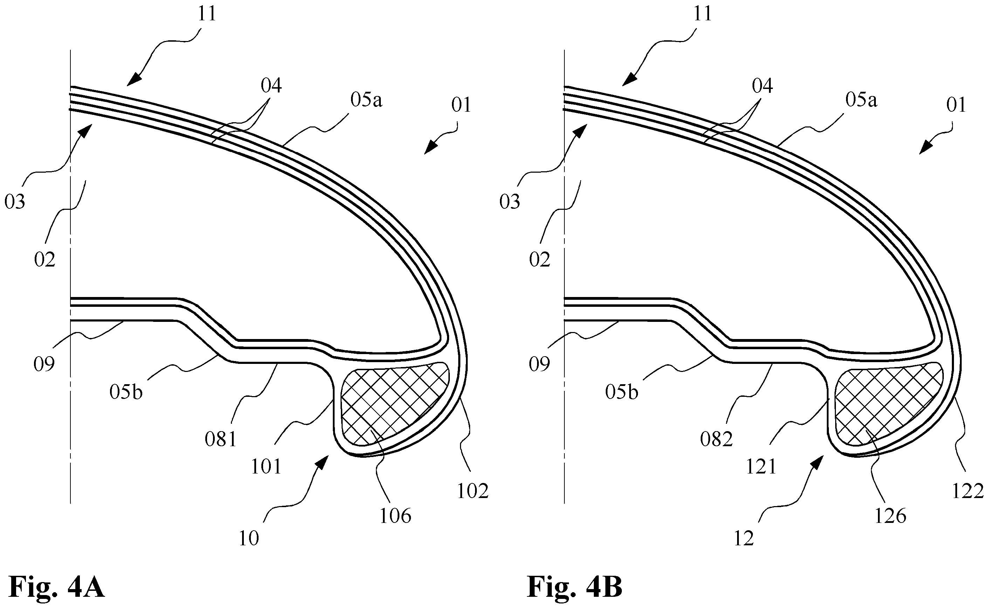

**Figur 2** zeigt einen axialen Querschnitt durch die erfindungsgemäße Hohlkammerfelge 01. Durch den Querschnitt wird die vom inneren Felgenbogen 11 und äußeren Felgenbogen 07 umschlossene Hohlkammer 02 sichtbar. Des Weiteren ist die Krümmung des ersten radial äußeren Reifeneingriffsabschnitts 10 und des zweiten radial äußeren Reifeneingriffsabschnitts 12 deutlich zu erkennen. Die durch den Querschnitt entstehende Schnittansicht des Profils der Hohlkammerfelge wird in weiteren beispielhaften Ausführungsformen in Figuren 3A und 3B und Figuren 4A und 4B detailliert gezeigt.

**Figuren 3A** und **3B** zeigen jeweils eine Schnittansicht des Profils der erfindungsgemäßen Hohlkammerfelge 01. Diese umfasst die Hohlkammer 02 sowie einen Rahmen 03, der den äußeren Felgenbogen 07, den inneren Felgenbogen 11, den ersten radial äußeren Reifeneingriffsabschnitt 10 bzw. den zweiten radial äußeren Reifeneingriffsabschnitt 12 umfasst. In der gezeigten Ausführung besteht der Rahmen 03 aus vier Schichten 04 des Faserverbundwerkstoffs und einer äußersten Schicht 05 des Faserverbundwerkstoffs. Die Schichten 04, 05 des Faserverbundwerkstoffs sind dabei kontinuierlich umlaufend.

Weiter ist es den Figuren 3A und 3B zu entnehmen, dass der innere Felgenbogen 11 eine erste Schulter 081 und eine zweite Schulter 082 aufweist. Die erste Schulter 081 und die zweite Schulter 082 sind dabei durch ein Tiefbett 09 voneinander beabstandet. Wie der Figur 3A zu entnehmen ist, umfasst der erste radial äußere Reifeneingriffsabschnitt 10 einen ersten Reifenhalteabschnitt 101 und eine erste äußere Wandung 102. Die erste äußere Wandung 102 weist eine Krümmung in Richtung des in Figur 3B dargestellten zweiten radial äußeren Reifeneingriffsabschnitts 12 auf. Die Krümmung setzt sich über die erste äußere Wandung 102 hinaus in den inneren Felgenbogen 11 fort. Der in Figur 3B dargestellte zweite radial äußere Reifeneingriffsabschnitt 12 umfasst, analog dem ersten radial äußeren Reifeneingriffsabschnitt 10 aus Figur 3A, ebenfalls einen zweiten Reifenhalteabschnitt 121 und eine zweite äußere Wandung 122. Die zweite äußere Wandung 122 weist eine Krümmung in Richtung des in Figur 3A dargestellten ersten radial äußeren Reifeneingriffsabschnitts 10 auf. Die Krümmung setzt sich über die zweite äußere Wandung 122 hinaus in den inneren Felgenbogen 11 fort. In einer bevorzugten Ausführung sind der erste und der zweite radial äußere Reifeneingriffsabschnitt 10, 12 symmetrisch ausgestaltet, was bedeutet, dass die zweite äußere Wandung 122 eine Krümmung aufweist, die spiegelsymmetrisch zur Krümmung der ersten Wandung 102 ist.

**Figuren 4A** und **4B** zeigen jeweils eine Schnittansicht des Profils einer weiteren Ausführungsform der erfindungsgemäßen Hohlkammerfelge 01, die jeweils ein Druckverteilelement 106, 126 umfasst. Die Hohlkammerfelge 01 weist eine Hohlkammer 02 und einen Rahmen 03 auf. Der Rahmen 03 umfasst mehrere Schichten 04 des Faserverbundwerkstoffs, eine erste äußerste Schicht 05a und eine zweite äußerste Schicht 05b des Faserverbundwerkstoffs. Der Rahmen 03 umfasst einen äußeren Felgenbogen 07, einen ersten radial äußeren Reifeneingriffsabschnitt 10 bzw. einen zweiten radial äußeren Reifeneingriffsabschnitt 12 und einen inneren Felgenbogen 11. Die Linie, an der sich die erste äußerste Schicht 05a des Faserverbundwerkstoffs und die zweite Schicht 05b des Faserverbundwerkstoffs treffen, liegt bei dieser Ausführung im Bereich der entsprechenden radial äußeren Reifeneingriffsabschnitte 10, 12. Die erste äußerste Schicht 05a des Faserverbundwerkstoffs stellt eine lokale Verstärkung einer besonders beanspruchten Stelle des inneren Felgenbogens 11 dar. Die zweite äußerste Schicht 05b des Faserverbundwerkstoffs ist kontinuierlich umlaufend. In einer alternativen nicht gezeigten Ausführungsweise überlappen sich die erste äußerste Schicht 05a des Faserverbundwerkstoffs und die zweite äußerste Schicht 05b des Faserverbundwerkstoffs nicht oder nur teilweise.

Der äußere Felgenbogen 07 in Figur 4A weist zudem eine erste Schulter 081 und ein Tiefbett 09 auf, wohingegen der äußere Felgenbogen 07 in Figur 4B eine zweite Schulter 082 und das Tiefbett 09 aufweist. Die erste Schulter 081 und die zweite Schulter 082 sind dabei durch das Tiefbett 09 voneinander beabstandet. Der erste radial äußere Reifeneingriffsabschnitt 10 in Figur 4A umfasst einen ersten Reifenhalteabschnitt 101 sowie eine erste äußere Wandung 102. Der zweite radial äußere Reifeneingriffsabschnitt 12 in Figur 4B umfasst einen zweiten Reifenhalteabschnitt 121 sowie eine zweite äußere Wandung 122. Das erste Druckverteilelement 106 in Figur 4A und das zweite Druckverteilelement 126 in Figur 4B sind bei diesem Ausführungsbeispiel im Bereich des ersten bzw. des zweiten radial äußeren Reifeneingriffsabschnitts 10, 12 ausgebildet.

## Patentansprüche

1. Hohlkammerfelge (01) für ein Fahrzeug, wobei die Hohlkammerfelge (01) einen ersten radial äußeren Reifeneingriffsabschnitt (10), der einen ersten Reifenhalteabschnitt (101) mit einer ersten äußeren Wandung (102) aufweist, und einen von dem ersten radial äußeren Reifeneingriffsabschnitt (10) beabstandeten zweiten radial äußeren Reifeneingriffsabschnitt (12), der einen zweiten Reifenhalteabschnitt (121) mit einer zweiten äußeren Wandung (122) aufweist, umfasst, und wobei die Hohlkammerfelge (01) aus einem Faserverbundwerkstoff mit mindestens zwei Schichten (04, 05) ausgebildet ist,
wobei die Hohlkammerfelge (01) einteilig mit dem ersten radial äußeren Reifeneingriffsabschnitt (10) und dem zweiten radial äußeren Reifeneingriffsabschnitt (12) ausgebildet ist und die erste äußere Wandung (102) eine Krümmung in Richtung des ersten Reifenhalteabschnitts (101) und die zweite äußere Wandung (122) eine Krümmung in Richtung des zweiten Reifenhalteabschnitts (121) aufweist **dadurch gekennzeichnet,**
**dass** sich die Krümmung der ersten äußeren Wandung (102) über die Länge der ersten äußeren Wandung (102) erstreckt und dass die Krümmung der ersten äußeren Wandung (102) ein Krümmungsmaß im Bereich von 0,05 mm⁻¹ bis 1,0 mm⁻¹ aufweist und/oder dass sich die Krümmung der zweiten äußeren Wandung (122) über die Länge der zweiten äußeren Wandung (102) erstreckt und dass die Krümmung der zweiten äußeren Wandung (102) ein Krümmungsmaß im Bereich von 0,05 mm⁻¹ bis 1,0 mm⁻¹ aufweist.

2. Hohlkammerfelge (01) nach Anspruch 1,
**dadurch gekennzeichnet,**
**dass** die axiale Ausdehnung des Profils der Hohlkammerfelge (01) größer ist als die radiale Ausdehnung des Profils der Hohlkammerfelge (01).

3. Hohlkammerfelge (01) nach Anspruch 2,
**dadurch gekennzeichnet,**
**dass** die axiale Ausdehnung des Profils der Hohlkammerfelge (01) einen Wert im Bereich von 10 mm bis 400 mm und/oder die radiale Ausdehnung des Profils der Hohlkammerfelge (01) einen Wert im Bereich von 5 mm bis 80 mm aufweist.

4. Hohlkammerfelge (01) nach einem der Ansprüche 1 bis 3,
**dadurch gekennzeichnet,**
**dass** die Krümmung der ersten äußeren Wandung (102) und die Krümmung der zweiten äußeren Wandung (122) über die äußeren Wandungen (102, 122) hinaus fortgesetzt sind und im Bereich eines inneren Felgenbogens (11) zu einer Krümmung stetig vereint sind.

5. Hohlkammerfelge (01) nach einem der Ansprüche 1 bis 4,
**dadurch gekennzeichnet,**
**dass** die Breite des ersten radial äußeren Reifeneingriffsabschnitts (10) und/oder des zweiten radial äußeren Reifeneingriffsabschnitts (12) bevorzugt 2 mm bis 60 mm beträgt.

6. Hohlkammerfelge (01) nach einem der Ansprüche 1 bis 5,
**dadurch gekennzeichnet,**
**dass** der erste radial äußere Reifeneingriffsabschnitt (10) und der erste Reifenhalteabschnitt (101) und/oder der zweite radial äußere Reifeneingriffsabschnitt (12) und der zweite Reifenhalteabschnitt (121) eine ebene Anlage für einen Reifen ausbilden.

7. Hohlkammerfelge (01) nach einem der Ansprüche 1 bis 6,
**dadurch gekennzeichnet,**
**dass** der Faserverbundwerkstoff Glasfasern, Aramidfasern, Borfasern, Basaltfasern, Quarzfasern, Kohlenstofffasern und/oder ein Gemisch daraus und eine Matrix umfasst.

8. Hohlkammerfelge (01) nach einem der Ansprüche 1 bis 7,
**dadurch gekennzeichnet,**
**dass** der Faserverbundwerkstoff eine erste äußerste Schicht (05a) und eine zweite äußerste Schicht (05b) aufweist, wobei ein Bogenabschnitt (15) der Hohlkammerfelge (01) mit der ersten äußersten Schicht (05a) des Faserverbundwerkstoffs und der zweiten äußersten Schicht (05b) des Faserverbundwerkstoffs vollständig umschlossen ist und wobei die erste äußerste Schicht (05a) des Faserverbundwerkstoffs und die zweite äußerste Schicht (05b) des Faserverbundwerkstoffs durch entlang des Bereiches des inneren Felgenbogens (11) und eines Tiefbetts (09) der Hohlkammerfelge (01) verlaufende Linien begrenzt sind.

9. Hohlkammerfelge (01) nach einem der Ansprüche 1 bis 8,
**dadurch gekennzeichnet,**
**dass** der Faserverbundwerkstoff vier oder fünf Schichten (04, 05) aufweist.

10. Hohlkammerfelge (01) nach einem der Ansprüche 1 bis 9,
**dadurch gekennzeichnet,**
**dass** die Hohlkammerfelge (01) im Bereich des inneren Felgenbogens (11), des ersten radial äußeren Reifeneingriffsabschnitts (10) und/oder des zweiten radial äußeren Reifeneingriffsabschnitts (12) durch lokal begrenzte Schichten (04, 05) des Faserverbundwerkstoffs verstärkt ist.

11. Hohlkammerfelge (01) nach einem der Ansprüche 1 bis 10,
**dadurch gekennzeichnet,**
**dass** zwischen den Schichten (04, 05) des Faserverbundwerkstoffs ein Druckverteilelement (106, 126) angeordnet ist.

12. Hohlkammerfelge (01) nach Anspruch 11,
**dadurch gekennzeichnet,**
**dass** das Druckverteilelement (106, 126) im Bereich des ersten radial äußeren Reifeneingriffsabschnitts (10) und/oder des zweiten radial äußeren Reifeneingriffsabschnitts (12) angeordnet ist oder dass das Druckverteilelement (106,126) die gesamte Hohlkammerfelge (01) umschließt.

13. Hohlkammerfelge (01) nach einem der Ansprüche 1 bis 12,
**dadurch gekennzeichnet,**
**dass** das Fahrzeug ein Zweirad, insbesondere ein Fahrrad, Motorrad, Kleinkraftrad, Roller, Tretroller, Pedelec oder Laufrad, ein Dreirad, insbesondere ein Trike, Liegefahrrad oder Velomobil, ein Einrad, ein Lastenrad, ein Rollstuhl, ein Anhänger, ein Beiwagen, eine Schubkarre, ein Handkarren oder ein Fuhrwerk, insbesondere ein Marathonwagen, ist.

14. Hohlkammerfelge (01) nach einem der Ansprüche 1 bis 13,
**dadurch gekennzeichnet,**
**dass** die Hohlkammerfelge (01) mit einem schlauchlosen Reifen bereifbar ist

## Claims

1. A hollow rim (01) for a vehicle, the hollow rim (01) comprising a first radially outer tire-engagement section (10), which has a first tire-holding section (101) having a first outer wall (102), and a second radially outer tire-engagement section (12), which is spaced apart from the first radially outer tire-engagement section (10) and has a second tire-holding section (121) having a second outer wall (122), and the hollow rim (01) being made of a fiber composite having at least two layers (04, 05), the hollow rim (01) being made in one piece with the first radially outer tire-engagement section (10) and the second radially outer tire-engagement section (12) and the first outer wall (102) having a curvature in the direction of the first tire-holding section (101) and the second outer wall (122) having a curvature in the direction of the second tire-holding section (121), **characterized in that**
the curvature of the first outer wall (102) extends across the length of the first outer wall (102) and **in that** the curvature of the first outer wall (102) has a curvature degree ranging from 0.05 mm⁻¹ to 1.0 mm⁻¹ and/or **in that** the curvature of the second outer wall (122) extends across the length of the second outer wall (102) and **in that** the curvature of the second outer wall (102) has a curvature degree ranging from 0.05 mm⁻¹ to 1.0 mm⁻¹.

2. The hollow rim (01) according to claim 1,
**characterized in that**
the axial extension of the profile of the hollow rim (01) is larger than the radial extension of the profile of the hollow rim (01).

3. The hollow rim (01) according to claim 2,
**characterized in that**
the axial extension of the profile of the hollow rim (01) has a value ranging from 10 mm to 400 mm and/or the radial extension of the profile of the hollow rim (01) has a value ranging from 5 mm to 80 mm.

4. The hollow rim (01) according to any one of the claims 1 to 3, **characterized in that**
the curvature of the first outer wall (102) and the curvature of the second outer wall (122) are continued beyond the outer walls (102, 122) and are continuously united in the area of an inner rim arc (11) to form a curvature.

5. The hollow rim (01) according to any one of the claims 1 to 4, **characterized in that**
the width of the first radially outer tire-engagement section (10) and/or the second radially outer tire-engagement section (12) is preferably 2 mm to 60 mm.

6. The hollow rim (01) according to any one of the claims 1 to 5, **characterized in that**
the first radially outer tire-engagement section (10) and the first tire-holding section (101) and/or the second radially outer tire-engagement section (12) and the second tire-holding section (121) form a plane abutment for a tire.

7. The hollow rim (01) according to any one of the claims 1 to 6, **characterized in that**
the fiber composite comprises glass fibers, aramid fibers, boron fibers, basalt fibers, quartz fibers, carbon fibers and/or a mixture thereof and a matrix.

8. The hollow rim (01) according to any one of the claims 1 to 7, **characterized in that**
the fiber composite has a first outermost layer (05a) and a second outermost layer (05b), an arc section (15) of the hollow rim (01) being entirely enclosed by the first outermost layer (05a) of the fiber composite and the second outermost layer (05b) of the fiber composite and the first outermost layer (05a) of the fiber composite and the second outermost layer (05b) of the fiber composite being limited by lines extending along the area of the inner rim arc (11) and a well (09) of the hollow rim (01).

9. The hollow rim (01) according to any one of the claims 1 to 8, **characterized in that**
the fiber composite has four or five layers (04, 05).

10. The hollow rim (01) according to any one of the claims 1 to 9, **characterized in that**
the hollow rim (01) is reinforced by locally limited layers (04, 05) of the fiber composite in the area of the inner rim arc (11), the first radially outer tire-engagement section (10) and/or the second radially outer tire-engagement section (12).

11. The hollow rim (01) according to any one of the claims 1 to 10, **characterized in that**
a pressure distributor (106, 126) is disposed between the layers (04, 05) of the fiber composite.

12. The hollow rim (01) according to claim 11,
**characterized in that**
the pressure distributor (106, 126) is disposed in the area of the first radially outer tire-engagement section (10) and/or the second radially outer tire-engagement section (12) or **in that** the pressure distributor (106, 126) encloses the entire hollow rim (01).

13. The hollow rim (01) according to any one of the claims 1 to 12, **characterized in that**
the vehicle is a two-wheeler, in particular a bicycle, a motorcycle, a moped, a scooter, a kick scooter, a pedelec or a balance bike, a tricycle, in particular a trike, a recumbent bicycle or velomobile, a unicycle, a cargo bike, a wheelchair, a trailer, a sidecar, a wheelbarrow, a handcart or a cart, in particular a marathon carriage.

14. The hollow rim (01) according to any one of the claims 1 to 13, **characterized in that**
a tubeless tire is mountable on the hollow rim (01).

## Revendications

1. Jante à double paroi (01) pour un véhicule, la jante à double paroi (01) comprenant une première partie (10) d'engagement de pneu radialement extérieure, qui a une première partie (101) de maintien de pneu ayant une première paroi extérieure (102), et une deuxième partie (12) d'engagement de pneu radialement extérieure, qui est espacée de la première partie (10) d'engagement de pneu radialement extérieure et a une deuxième partie (121) de maintien de pneu ayant une deuxième paroi extérieure (122), et la jante à double paroi (01) étant constituée d'un composite renforcé de fibres ayant au moins deux couches (04, 05), la jante à double paroi (01) étant fabriquée d'une seule pièce avec la première partie (10) d'engagement de pneu radialement extérieure et la deuxième partie (12) d'engagement de pneu radialement extérieure et la première paroi extérieure (102) ayant une courbure en direction de la première partie (101) de maintien de pneu et la deuxième paroi extérieure (122) ayant une courbure en direction de la deuxième partie (121) de maintien de pneu,
**caractérisée en ce que**
la courbure de la première paroi extérieure (102) s'étend sur la longueur de la première paroi extérieure (102) et **en ce que** la courbure de la première paroi extérieure (102) a un degré de courbure allant de 0,05 mm⁻¹ à 1,0 mm⁻¹ et/ou **en ce que** la courbure de la deuxième paroi extérieure (122) s'étend sur la longueur de la deuxième paroi extérieure (102) et **en ce que** la courbure de la deuxième paroi extérieure (102) a un degré de courbure allant de 0,05 mm⁻¹ à 1,0 mm⁻¹.

2. Jante à double paroi (01) selon la revendication 1,
**caractérisée en ce que**
l'extension axiale du profil de la jante à double paroi (01) est plus grande que l'extension radiale du profil de la jante à double paroi (01).

3. Jante à double paroi (01) selon la revendication 2,
**caractérisée en ce que**
l'extension axiale du profil de la jante à double paroi (01) a une valeur comprise entre 10 mm et 400 mm et/ou l'extension radiale du profil de la jante à double paroi (01) a une valeur comprise entre 5 mm et 80 mm.

4. Jante à double paroi (01) selon l'une quelconque des revendications 1 à 3,
**caractérisée en ce que**
la courbure de la première paroi extérieure (102) et la courbure de la deuxième paroi extérieure (122) se poursuivent au-delà des parois extérieures (102, 122) et sont continuellement réunies dans la zone d'un arc de jante (11) intérieur pour former une courbure.

5. Jante à double paroi (01) selon l'une quelconque des revendications 1 à 4,
**caractérisée en ce que**
la largeur de la première partie (10) d'engagement de pneu radialement extérieure et/ou de la deuxième partie (12) d'engagement de pneu radialement extérieure est de préférence comprise entre 2 mm et 60 mm.

6. Jante à double paroi (01) selon l'une quelconque des revendications 1 à 5,
**caractérisée en ce que**
la première partie (10) d'engagement de pneu radialement extérieure et la première partie (101) de maintien de pneu et/ou la deuxième partie (12) d'engagement de pneu radialement extérieure et la deuxième partie (121) de maintien de pneu forment un appui plan pour un pneu.

7. Jante à double paroi (01) selon l'une quelconque des revendications 1 à 6,
**caractérisée en ce que**
le composite renforcé de fibres comprend des fibres de verre, des fibres aramides, des fibres de bore, des fibres de basalte, des fibres de quartz, des fibres de carbone et/ou un mélange de celles-ci et une matrice.

8. Jante à double paroi (01) selon l'une quelconque des revendications 1 à 7,
**caractérisée en ce que**
le composite renforcé de fibres a une première couche ultrapériphérique (05a) et une deuxième couche ultrapériphérique (05b), une section d'arc (15) de la jante à double paroi (01) étant entièrement entourée par la première couche ultrapériphérique (05a) du composite renforcé de fibres et la deuxième couche ultrapériphérique (05b) du composite renforcé de fibres et la première couche ultrapériphérique (05a) du composite renforcé de fibres et la deuxième couche ultrapériphérique (05b) du composite renforcé de fibres étant limitées par des lignes s'étendant le long de la zone de l'arc de jante intérieur (11) et d'un creux (09) de la jante à double paroi (01).

9. Jante à double paroi (01) selon l'une quelconque des revendications 1 à 8,
**caractérisée en ce que**
le composite renforcé de fibres comporte quatre ou cinq couches (04, 05).

10. Jante à double paroi (01) selon l'une quelconque des revendications 1 à 9,
**caractérisée en ce que**
la jante à double paroi (01) est renforcée par des couches localement limitées (04, 05) du composite renforcé de fibres dans la zone de l'arc de jante intérieur (11), de la première partie (10) d'engagement de pneu radialement extérieure et/ou de la deuxième partie (12) d'engagement de pneu radialement extérieure.

11. Jante à double paroi (01) selon l'une quelconque des revendications 1 à 10,
**caractérisée en ce**
**qu'**un distributeur de pression (106, 126) est disposé entre les couches (04, 05) du composite renforcé de fibres.

12. Jante à double paroi (01) selon la revendication 11,
**caractérisée en ce que**
le distributeur de pression (106, 126) est disposé dans la zone de la première partie (10) d'engagement de pneu radialement extérieure et/ou de la deuxième partie (12) d'engagement de pneu radialement extérieure ou **en ce que** le distributeur de pression (106, 126) entoure l'ensemble de la jante à double paroi (01).

13. Jante à double paroi (01) selon l'une quelconque des revendications 1 à 12,
**caractérisée en ce que**
le véhicule est un deux-roues, notamment une bicyclette, une motocyclette, un cyclomoteur, un scooter, un kick scooter, un pedelec ou une draisienne, un tricycle, un vélo couché ou vélomobile, un monocycle, un vélo cargo, un fauteuil roulant, une remorque, un side-car, une brouette, une charrette à bras ou une voiturette, notamment une voiture marathon.

14. Jante à double paroi (01) selon l'une quelconque des revendications 1 à 13,
**caractérisée en ce**
**qu'**un pneu tubeless est montable sur la jante à double paroi (01).
